(19) Europäisches Patentamt
European Patent Office
Office européen des brevets

(11) **EP 0 922 488 A2**

## (12) EUROPEAN PATENT APPLICATION

(43) Date of publication:
**16.06.1999 Bulletin 1999/24**

(51) Int Cl.$^6$: **B01J 2/00**

(21) Application number: **98309795.7**

(22) Date of filing: **30.11.1998**

(84) Designated Contracting States:
**AT BE CH CY DE DK ES FI FR GB GR IE IT LI LU
MC NL PT SE**
Designated Extension States:
**AL LT LV MK RO SI**

(30) Priority: **01.12.1997 JP 34579097**

(71) Applicant: **Nara Machinery Co., Ltd.
Ohta-ku, Tokyo 143-0002 (JP)**

(72) Inventor: **Liao, Liefan, Nara Machinery Co.,Ltd.
Tokyo 143-0002 (JP)**

(74) Representative: **Smith, Norman Ian et al
fJ CLEVELAND
40-43 Chancery Lane
London WC2A 1JQ (GB)**

(54) **Composite solid particle and a method for producing same**

(57) The present invention relates to a composite solid particle obtained by attaching or sticking fine particles on the surface of a solid particle which acts as a core by application of an impact and then allowing a crystal or crystals of a fine particle component to grow on the core-fine particle combination with the attached fine particles acting as crystal nuclei. Also described is a production process for producing the solid particle.

FIG 1

## Description

### BACKGROUND OF THE INVENTION

Field of the Invention

The present invention relates to the field of surface-modified composite solid particles and a method for producing the same.

Description of the Related Art

Japanese Patent Publication No. 3-2009, describes a production process for a composite solid particle for the purposes of preventing coagulation and discoloration and deterioration and improving dispersibility, catalytic effect and magnetic characteristics by fixing fine particles (hereinafter referred to as fine particles) to the surface of another particle which acts as a core (hereinafter referred to as a core particle). It has become possible to produce efficiently a functional composite or hybrid powder material (composite or hybrid powder) which is homogeneous and has stable characteristics by employing a high velocity gas stream impact method which is a dry particle compositing method requiring no organic solvent and no water, which is described therein.

However, in the composite solid particle produced by the method described above, the fine particles are merely attached evenly on the surface of the core particle, and therefore a rough weight proportion of the fine particles exerting influence on an improvement in the functionality to the core particle depends on the surface area of the core particle and the cross section (projected area) of the fine particle. In general, it is considered that the maximum proportion by weight of the fine particles to the core particle is a proportion in which the fine particles cover the surface of the core particle only in roughly one layer. Thus, the maximum weight proportion of the fine particles to the core particle is calculated from:

$$\text{maximum weight proportion} = (4r\rho 1/R\rho 0) \times 100 \%$$

where r: is the radius of the fine particle

R: is the radius of the core particle
$\rho 1$: is the density of the fine particle, and
$\rho 0$: is the density of the core particle

As a result thereof, if the radii and the densities of the core particle and the fine particles are fixed, the maximum weight proportion of the fine particles is also fixed, and a weight proportion exceeding this can not be achieved, which brings about the problem that further elevation in the function can not be realised. Thus, the problem to be solved by the present invention involves this point.

### SUMMARY OF THE INVENTION

An object of the present invention is to solve these problems in light of the conditions as described above.

A first aspect of the invention relates to a method for producing a composite solid particle by fixing fine particles to the surface of a particle which acts as a core, wherein the fine particles are fixed to the surface of the core particle to form a core-fine particle combination, and then a crystal or crystals of the fine particle component is allowed to grow on the core-fine particle combination to fix firmly the fine particles to the core particle in a peel resistant manner.

A second aspect of the invention relates to a composite solid particle obtained by modifying the surface of a solid particle by fixing fine particles to the surface of the solid particle which acts as a core to form a core-fine particle combination, wherein a crystal or crystals of the fine particle component has been allowed to grow on the core-fine particle combination to fix firmly the fine particles to the core particle in a peel resistant manner.

The core-fine particle combination is mixed in a fine particle component solution to allow the crystal or crystals of the fine particle component to grow with the attached fine particles being used as crystal nuclei.

The fine particle combination solution described above may be produced by causing the fine particle component to react in a liquid phase.

The fine particle component described above may be calcium monohydrogenphosphate.

The crystal of the fine particle component may be allowed to grow in an aqueous solution in which a hydrogen ion exponent (pH value) is adjusted to a range of 4 and 6, preferably between 4.5 and 5.8 and more preferably to 5.7.

Calcium monohydrogenphosphate can be generated by adding pyrophosphoric acid to a suspension of calcium hydroxide to react them.

In the particle obtained by allowing the crystal to grow by carrying out the process of the present invention, the content of the fine particles can be adjusted by the degree of the crystal growth, and therefore control can be effected such that the content of the fine particles can be freely increased. This has so far been impossible by a conventional fixing method.

When the crystal grows long as is the case with needle-like and columnar crystals, the surface area of the fine particle can be expanded significantly.

Further, there can be obtained as well a composite solid particle in which needle-like and columnar crystals are connected to a core particle at a longitudinal end, which has so far been unobtainable by a conventional fixing method.

Thus a composite solid particle obtained by allowing the fine particle component to grow as a crystal not only can improve and enhance various functions (for example, electronic and magnetic characteristics, optical characteristics, thermal characteristics and biological characteristics) held by the fine particle to a large extent but also can raise the compression mouldability and the content-uniformizing characteristics. Further, a rise in the surface area of the fine particle can improve various reaction rates.

The composite solid particle can be used for electric and electronic materials, magnetic materials, optical functional materials, medicines, cosmetics, biological materials and construction materials.

The invention will be described now by way of example only, with particular reference to the accompanying drawings. In the drawings:

Fig. 1 is a photograph taken by means of a scanning type electron microscope of a composite (solid) particle obtained by attaching calcium monohydrogenphosphate on the surface of a nylon 12 spherical particle which is a core particle,
Fig. 2 is a photograph taken by means of a scanning type electron microscope of a composite (solid) particle obtained by allowing crystals to grow in an Experimental Example,
Fig. 3 is a photograph taken by means of a scanning type electron microscope of a particle obtained in Comparative Example 1, and
Fig. 4 is a photograph taken by means of a scanning type electron microscope of a particle obtained in Comparative Example 2.

DESCRIPTION OF THE PREFERRED EMBODIMENTS

The core particle used for producing a composite solid particle in accordance with the present invention includes, for example, various cellulose and derivatives thereof such as crystalline cellulose, hydroxypropyl cellulose and carboxymethyl cellulose, starches and derivatives thereof such as potato starch, corn starch, wheat starch, partially soluble starch and dextrin, sugars such as lactose, and synthetic polymers such as nylon, polyethylene and polystyrene. Further, there can also be used as the core particle, metal powders of iron, nickel, aluminum and copper, and inorganic matters such as alumina, zirconium and silicon carbide.

The fine particle can be formed from materials having a characteristic of crystal growth, such as various crystalline inorganic compounds and organic compounds.

The crystalline inorganic compounds include hydroxides halides, carbonates, sulphates, nitrates, phosphates, hydrogenphosphates and silicates of various metals.

The crystalline organic compounds include crystalline chemicals such as ibuprofen, ketoprofen, indometacin, phenacetin, oxyphenbutazone, ethenezamide, salicylic acid and benzoic acid.

Further, when it is intended to obtain a composite particle in which a crystal of a metal oxide having a very small solubility in water is allowed to grow on the surface of a core particle, the composite particle can be obtained by allowing the crystal to grow in the form of hydroxide, halide carbonate, sulphate, nitrate, phosphate or hydrogenphosphate of metal and then calcining it.

Conventionally known methods can be employed as a method for attaching or adhering the fine particles on the core particle. These include various mechanical fixing methods such as high velocity gas stream impact methods described in Japanese Patent Publication No. 3-2009 and Japanese Unexamined Patent Publication No. 6-210152. However, the present method is not restricted to the use of such methods and any method can be used so long as it can attach the fine particles to the core particle.

The size of the core particle typically will be in a range of 0.5 $\mu$m to 2 mm. When the high velocity gas stream impact method is used as the method for attaching the fine particles on the core particle, the core particle having a size of less than 0.5 $\mu$m floats in the gas stream, so that the necessary impact is difficult to transmit to the particle. On the other hand, if the size exceeds 2 mm, the particle is liable to be broken by impact, so that it is difficult to obtain the prescribed quality, and the efficiency is not good. The shape of the core particle is preferably spherical or elliptical but may be other unspecified shape.

The size of the fine particle is preferably 1/5 or less, more preferably 1/10 or less that of the core particle in the case of the various mechanical methods (fixing method). To be specific, the particle diameter thereof is 0.01 to 10 $\mu$m. When the high velocity gas stream impact method is used, the crystalline particle is selectively pulverized in an impact chamber of a powder surface-modifying treatment apparatus described later, and therefore it does not specifically matter how big the fine particle (substance to be fixed) is.

A method for allowing a crystal to grow includes a method for allowing it to physically grow such as vacuum deposition and a method for allowing it to grow in a vapour phase, a liquid phase or a solid phase. Any such methods can be used. For example, a liquid phase-growing method is a method in which a crystal is allowed to grow from a solution obtained by dissolving a fine particle material (solute) in a solvent in an supersaturated state. The solution of an supersaturated state can be obtained using a conventional method, for example, cooling a solution, evaporating a solvent, or applying a pressure to a solution, or such reactions as solid-liquid, liquid-liquid, or vapour liquid reaction.

When the fine particle is calcium monohydrogenphosphate ($CaHPO_4$), this substance has a very small solubility in water (0.02 g/100 g at 24.5°C), and therefore the crystal is allowed to grow in an supersaturated state obtained by a reaction method (solid-liquid reaction method). For example, the crystal is suitably allowed to grow with calcium monohydrogenphosphate fixed on the core particle being used as a crystal nucleus while reacting a calcium hydroxide suspension with pyrophosphoric acid to form calcium monohydrogenphosphate. In this case, the reaction liquid has a hydrogen ion exponent (pH value) adjusted to be in a range of 4 to 6, preferably between 4.5 and 5.8, and more preferably to 5.7.

Experimental Example

Next, an experimental example will be described. An experiment was carried out in which nylon 12 was used as a core particle and calcium monohydrogenphosphate was used as a fine particle.

Preparation of the core-fine particle combinations.

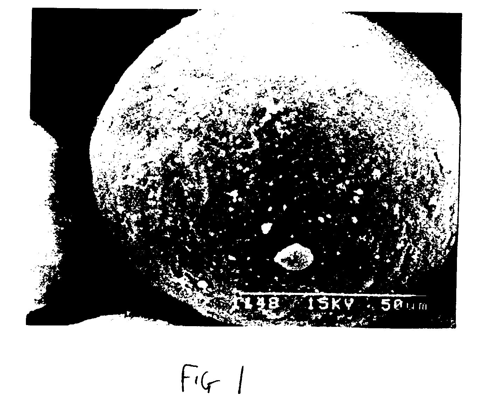

A mixed powder of a core particle comprising a spherical particle (SP-500L type, manufactured by Toray Co., Ltd.) of nylon 12 having an average particle diameter of 50 μm and a fine particle comprising tabular calcium monohydrogenphosphate (manufactured by Wako Junyaku Ind. Co., Ltd.) having an average side length of about 50 μm in a weight ratio of 10 : 1 was treated (treated according to the method described in Japanese Patent Publication No. 3-2009) on the following conditions by means of a powder surface-modifying treatment apparatus (NHS-O type, manufactured by Nara Machinery Co., Ltd.), whereby obtained was a core-fine particle combination in which calcium monohydrogenphosphate pulverized selectively in an impact chamber of the powder surface-modifying treatment apparatus described above was embedded and fixed on the surface of the nylon 12 spherical particle in the form of a fine particle to thereby allow calcium monohydrogenphosphate to be attached to the surface. A scanning type electron microscopic photograph of this core-fine particle combination is shown in Fig. 1. The conditions were

charged amount : 10 g
revolution number: 12000 rpm
treating time : 5 minutes

Preparation of calcium monohydrogenphosphate-generated solution:

0.7409 g of fine particle-shaped calcium hydroxide (manufactured by Kanto Chemical Co., Ltd.) were added to a vessel charged with 100 g of purified water to prepare a calcium hydroxide suspension, and 100 g of a pyrophosphoric acid (manufactured by Showa Chemical Co., Ltd.) aqueous solution having a concentration of 0.05 mol/l was slowly added to this suspension in 10 minutes while stirring. Next, stirring was carried out for 2 hours by means of a magnetic stirrer (RC-10 type, manufactured by Tokyo Rika Kikai Co., Ltd.), and then the reaction liquid was filtered (in order to filter off large-sized crystals formed at an initial stage of the reaction and impurities) to obtain a calcium monohydrogenphosphate- generated solution in the form of a filtrate. This generated solution was suspended.

This generated solution was controlled to a pH value of 5.70 by purified water and the pyrophosphoric acid aqueous solution described above.

Formation of composite particle:

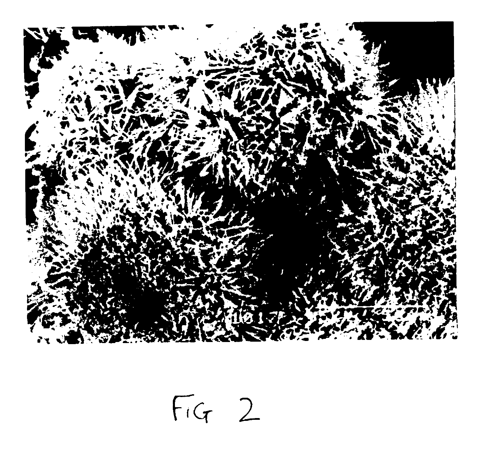

The calcium monohydrogenphosphate- generated solution 50 g prepared above was put into a glass vessel charged with 100 milligram of the core-fine particle combination prepared above to mix them well while shaking the vessel by hand, and then the vessel was tightly sealed and left to stand at 25°C. After seven days, obtained were composite solid particles in which crystals grew in a needle-like form with calcium monohydrogenphosphate embedded on the surface of the nylon spherical particle being used as a crystal nucleus. The solution was filtered, and the filtered substances obtained were washed with water and dried, whereby the composite solid particles in which the fine particle component grew to crystals were obtained. A scanning type electron microscopic photograph of this particle is shown in Fig. 2.

Even when some impact was given to the crystal-grown particle obtained above, the crystals did not peel off from the core particle, and it was confirmed that the crystals had grown in a firmly fixed state.

Comparative Example 1

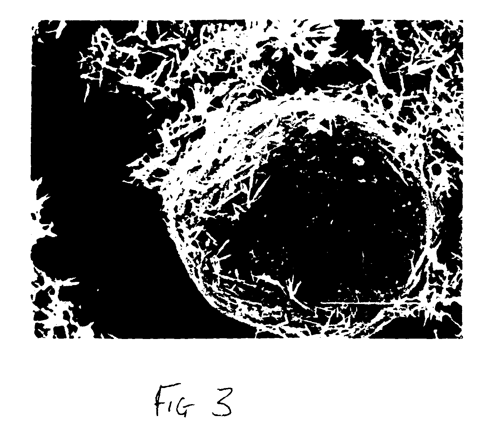

The same treatment as in the Experimental Example described above was carried out to try crystal growth, except that the mixed powder of the nylon 12 spherical particle and calcium monohydrogenphosphate in a weight ratio of 10 : 1 was not subjected to a fixing treatment by means of the powder surface-modifying treatment apparatus. A scanning type electron microscopic photograph of a particle obtained as a result thereof is shown in Fig. 3. It appeared at first sight as if crystals grew on the core particle, but it was confirmed that the crystals were readily peeled off.

Comparative Example 2

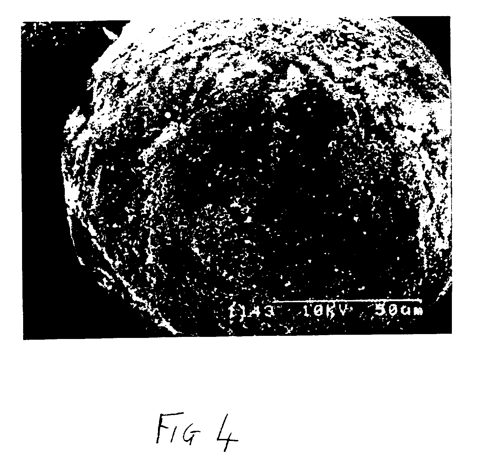

The same treatment as in the Experimental Example described above was carried out, except that the generated solution prepared above was controlled to a pH value of 6.3. In this case, crystal growth was not observed. A scanning type electron microscopic photograph of the particle thus obtained is shown in Fig. 4.

## Claims

1. A method for producing a composite solid particle by fixing fine particles to the surface of a particle which acts as a core, wherein the fine particles are attached or stuck to the surface of said core particle, and then a crystal or crystals of the fine particle component is allowed to grow on said core-fine particle combination to fix firmly the fine particles to the core particle in a peel resistant manner.

2. A composite solid particle obtained by modifying the surface of a solid particle by fixing fine particles to the surface of the particle which acts as a core, wherein a crystal or crystals of the fine particle component is allowed to grow on a core-fine particles combination to fix firmly the fine particles to the core particle in a peel resistant manner.

3. A method according to claim 1 or a surface-modified solid particle according to claim 2, wherein the core-fine particle combination is mixed in a fine particle component solution to allow the crystal of the fine particle component to grow with said attached fine particles being used as crystal nuclei.

4. A method or particle according to claim 3, wherein the fine particle component solution is produced by causing the fine particle component to react in a liquid phase.

5. A method or particle according to claim 4, wherein the fine particle component is calcium monohydrogenphosphate.

6. A method or particle according to claim 5, wherein the crystal of the fine particle component is allowed to grow in an aqueous solution in which a hydrogen ion exponent is adjusted between 4.5 and 5.8, more preferably to 5.7.

7. A method or particle according to claim 5 or claim 6, wherein the solution of calcium monohydrogenphosphate is produced by adding pyrophosphoric acid to a suspension of calcium hydroxide to react them.

FIG 1

FIG 2

FIG 3

FIG 4